# EUROPÄISCHE PATENTSCHRIFT

(11) **EP 3 199 429 B1**
(45) Veröffentlichungstag und Bekanntmachung des Hinweises auf die Patenterteilung: **12.12.2018**
(21) Anmeldenummer: 17153165.0
(22) Anmeldetag: 26.01.2017
(51) Int. Cl.: B62D 15/02

(54) **VERFAHREN ZUM VERFAHREN ZUM UNTERSTÜTZEN EINES FAHRERS EINES KRAFTFAHRZEUGS BEI EINEM EINPARKVORGANG IN EINE PARKLÜCKE MIT BORDSTEIN, FAHRERASSISTENZSYSTEM SOWIE KRAFTFAHRZEUG**
METHOD FOR ASSISTING A DRIVER OF A MOTOR VEHICLE IN A PARKING MANOEUVRE WITH BORDER STONE, DRIVER ASSISTANCE SYSTEM AND MOTOR VEHICLE
PROCÉDÉ D'ASSISTANCE À UN CONDUCTEUR DE VÉHICULE AUTOMOBILE LORS DU PROCESSUS DE STATIONNEMENT DANS UNE PLACE DE STATIONNEMENT AYANT UNE BORDURE TROTTOIR, SYSTÈME D'ASSISTANCE AU CONDUCTEUR ET VÉHICULE AUTOMOBILE

(30) Priorität: 26.01.2016 DE 102016101359
(43) Veröffentlichungstag der Anmeldung: 02.08.2017
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)

(56) Entgegenhaltungen:
- DE-A1-102009 003 216
- DE-A1-102013 220 931
- US-A1- 2015 100 193

## Beschreibung

Die Erfindung betrifft ein Verfahren zum Unterstützen eines Fahrers eines Kraftfahrzeugs bei einem Einparkvorgang in eine einen Bordstein aufweisende Parklücke, bei welchem mittels einer fahrzeugseitigen Sensoreinrichtung die den Bordstein aufweisende Parklücke in einem Umgebungsbereich des Kraftfahrzeugs erkannt wird. Die Erfindung betrifft außerdem ein Fahrerassistenzsystem sowie ein Kraftfahrzeug.

Vorliegend richtet sich das Interesse insbesondere auf Fahrerassistenzsysteme, welche einen Fahrer des Kraftfahrzeugs bei einem Einparkvorgang in eine Parklücke unterstützen. Aus dem Stand der Technik sind hierzu bereits Fahrerassistenzsysteme bekannt, welche mithilfe von entsprechenden Sensoren Parklücken beziehungsweise freie Stellplätze in einem Umgebungsbereich des Kraftfahrzeugs erkennen können und den Fahrer beim Einparkvorgang in die Parklücke unterstützen. Darüber hinaus sind aus dem Stand der Technik Fahrerassistenzsysteme bekannt, welche das Kraftfahrzeug zumindest semi-autonom in eine Parklücke manövrieren können. Beim semi-autonomen Manövrieren übernimmt ein Fahrerassistenzsystem des Kraftfahrzeugs eine Lenkung des Kraftfahrzeugs, während der Fahrer des Kraftfahrzeugs das Gaspedal sowie die Bremse des Kraftfahrzeugs betätigt. Beim autonomen Manövrieren beziehungsweise beim vollautonomen Manövrieren betätigt das Fahrerassistenzsystem zusätzlich zu der Lenkung das Gaspedal und die Bremse.

Zum Unterstützen des Fahrers bei dem Einparkvorgang kann das Kraftfahrzeug beispielsweise während einer Vorbeifahrt an der Parklücke diese erkennen und vermessen. Daraufhin wird diese Parklücke dem Fahrer des Kraftfahrzeugs angeboten, also dem Fahrer das Vorhandensein der Parklücke signalisiert, indem das Kraftfahrzeug beispielsweise zumindest semi-autonom zu einer Startposition bewegt wird. Ausgehend von dieser Startposition wird eine Fahrtrajektorie in die Parklücke bestimmt, entlang welcher das Kraftfahrzeug zumindest semi-autonom bewegt in die Parklücke eingeparkt wird.

Probleme ergeben sich hierbei jedoch, falls die Parklücke einen Bordstein beziehungsweise Randstein aufweist, über welchen das Kraftfahrzeug während des Einparkvorgangs bewegt wird. Dabei kann es nämlich vorkommen, dass Räder des Kraftfahrzeugs, insbesondere Felgen der Räder, bei der Fahrt über den Bordstein beschädigt werden. Um dies zu verhindern, muss dabei ein Winkel, unter welchem das Kraftfahrzeug über den Bordstein bewegt wird, einen bestimmten Grenzwert überschreiten. Hierzu beschreibt die DE 10 2009 003 216 A1 ein Fahrerassistenzsystem, gemäß dem ein Höhenprofil einer Fahrbahnoberfläche entlang einer Fahrtrajektorie erfasst wird. Wenn sich beispielsweise auf einer vorher berechneten Einparktrajektorie ein Bordstein befindet, so kann die Querführung des Kraftfahrzeugs derart verändert werden, dass der Bordstein in einem besonders günstigen Winkel überfahren wird und somit eine Beschädigung der Felge des Kraftfahrzeugs verhindert wird. Wenn jedoch dieser Winkel beim Einparken nicht bereitgestellt werden kann, so kann das Kraftfahrzeug, welches bereits zu der Startposition bewegt wurde, nicht beschädigungsfrei in die Parklücke eingeparkt werden und der Parkvorgang muss abgebrochen werden. Dies mag verwirrend für einen Fahrer des Kraftfahrzeugs erscheinen, welchem die Parklücke bereits für den Einparkvorgang angeboten wurde.

DE 10 2009 003 216 A1 offenbart ein Verfahren mit einem prädiktiven Detektieren eines Höhenprofils einer Straßenoberfläche entlang einer Radtrajektorie, d. h. einer Parktrajektorie durch eine Sensorvorrichtung. Eine vorbestimmte Aktion wird ausgelöst, wenn ein vorbestimmtes Höhenprofil detektiert wird. Ein Steuerbefehl wird aus einem Satz von Steuerbefehlen zum automatischen Steuern einer Fahrzeugfunktion in Abhängigkeit von der Charakteristik des erfaßten Höhenprofils ausgewählt. Die Trajektorie wird in einem vorbestimmten Winkel über eine Straßenkante geführt.
Es ist Aufgabe der vorliegenden Erfindung, einen Fahrer eines Kraftfahrzeugs besonders zuverlässig und nutzerfreundlich bei einem Einparkvorgang des Kraftfahrzeugs in eine Parklücke zu unterstützen.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Ein erfindungsgemäßes Verfahren dient zum Unterstützen eines Fahrers eines Kraftfahrzeugs bei einem Einparkvorgang in eine einen Bordstein aufweisende Parklücke. Bei dem Verfahren wird mittels einer fahrzeugseitigen Sensoreinrichtung die den Bordstein aufweisende Parklücke in einem Umgebungsbereich des Kraftfahrzeugs erkannt. Erfindungsgemäß wird in dem Umgebungsbereich eine Startposition für den Einparkvorgang des Kraftfahrzeugs in die Parklücke abgeschätzt, ausgehend von der abgeschätzten Startposition eine über den Bordstein in die Parklücke führende Fahrtrajektorie für das Kraftfahrzeug bestimmt, ein Winkel zwischen der Fahrtrajektorie und dem Bordstein bestimmt und die Parklücke als für den Einparkvorgang geeignet klassifiziert, falls der Winkel einen vorbestimmten Grenzwert überschreitet. Dabei kann das Kraftfahrzeug während der Klassifizierung der Parklücke, also während der Abschätzung der Startposition sowie der Bestimmung der Fahrtrajektorie und des Winkels zwischen der Fahrtrajektorie und dem Bordstein, weiterbewegt werden. Anders ausgedrückt, kann das Fahrerassistenzsystem die Klassifizierung der Parklücke während der Fahrt des Kraftfahrzeugs durchführen. Das Kraftfahrzeug muss also nicht angehalten werden, wodurch dem Fahrer suggeriert werden könnte, dass es sich bei der von der Sensoreinrichtung erfassten Parklücke um eine geeignete Parklücke handelt.

Durch Abschätzen der Startposition kann somit auf besonders schnelle und für den Fahrer des Kraftfahrzeugs komfortable Weise die Parklücke, welche von der fahrzeugseitigen Sensoreinrichtung erfasst wurde, klassifiziert werden. Nur falls es sich bei der Parklücke um eine geeignete Parklücke handelt, wird diese dem Fahrer angeboten , sodass der Fahrer besonders einfach und nutzerfreundlich bei einem Einparkvorgang in diese geeignete Parklücke unterstützt wird.

Das Verfahren dient dazu, ein Fahrerassistenzsystem zu realisieren, welches einen Fahrer des Kraftfahrzeugs beim Einparken in die den Bordstein aufweisende Parklücke unterstützt. Insbesondere soll ein Fahrerassistenzsystem realisiert werden, welches das Kraftfahrzeug zumindest semi-autonom in eine Parklücke einparken kann. Hierbei wird die Parklücke anhand von Sensordaten der Sensoreinrichtung des Kraftfahrzeugs erkannt. Zu diesem Zweck kann das Kraftfahrzeug beispielsweise zumindest semi-autonom bewegt werden, während der Umgebungsbereich des Kraftfahrzeugs mittels der fahrzeugseitigen Sensoreinrichtung insbesondere kontinuierlich erfasst wird. Die fahrzeugseitige Sensoreinrichtung kann beispielsweise ein Ultraschallsensor und/oder eine Kamera und/oder ein Laserscanner sein. Insbesondere kann mit der fahrzeugseitigen Sensoreinrichtung ein Abstand zwischen dem Kraftfahrzeug und Objekten in dem Umgebungsbereich, also eine Position der Objekte relativ zum Kraftfahrzeug, bestimmt werden. Solche Objekte können beispielsweise Objekte sein, welche die Parklücke begrenzen, beispielsweise andere, in benachbarten Parklücken abgestellte Kraftfahrzeuge. Mittels der Sensoreinrichtung kann also nicht nur die Parklücke erkannt, sondern, beispielsweise anhand von Abstandsdaten der die Parklücke begrenzenden Objekte, diese auch vermessen werden. Bei der Parklücke handelt es sich insbesondere um eine Längsparklücke, in welche das Kraftfahrzeug insbesondere rückwärts eingeparkt werden soll. Eine Länge der Parklücke erstreckt sich dabei insbesondere entlang eines Verlaufes einer Fahrbahn, auf welcher sich das Kraftfahrzeug bewegt. Der Bordstein erstreckt sich insbesondere über die Länge der Längsparklücke, ist also parallel zu dem Fahrbahnverlauf orientiert. Ferner kann eine aktuelle Position des Kraftfahrzeugs in Bezug auf die erkannte Parklücke bestimmt werden.

Erfindungsgemäß ist es dabei nun vorgesehen, dass, beispielsweise von einer Steuereinrichtung des Fahrerassistenzsystems, die Startposition, ausgehend von welcher der Einparkvorgang gestartet werden soll, zunächst abgeschätzt wird, insbesondere ohne dass das Kraftfahrzeug zuvor zu der Startposition manövriert wurde. Dies bedeutet, dass, insbesondere zeitlich vor dem tatsächlichen Beginn des Einparkvorgangs, diejenige Startposition, welche insbesondere von der aktuellen Position des Kraftfahrzeugs unterschiedlich ist, bestimmt wird, ausgehend von welcher der Einparkvorgang später gestartet werden soll. Der Einparkvorgang soll aber insbesondere nur unter der Voraussetzung gestartet und durchgeführt werden, dass es sich bei der Parklücke um eine für den Einparkvorgang geeignete Parklücke handelt. Anders ausgedrückt soll das Kraftfahrzeug von dieser Startposition aus nur dann in die Parklücke eingeparkt werden, falls die Parklücke als für den Einparkvorgang geeignet klassifiziert wurde. Geeignet ist die Parklücke dann, wenn das Kraftfahrzeug während des Einparkens in die Parklücke bei der Fahrt über den Bordstein nicht beschädigt wird.

Zur Klassifizierung der von der Sensoreinrichtung erfassten Parklücke wird dabei ausgehend von der abgeschätzten Startposition die über den Bordstein führende Fahrtrajektorie für das Kraftfahrzeug bestimmt. Die von der Startposition aus bestimmte Fahrtrajektorie kreuzt also den Bordstein, sodass das Kraftfahrzeug, wenn es entlang der Fahrtrajektorie in die Parklücke bewegt wird, mit zumindest einem Rad über den Bordstein fährt beziehungsweise rollt. Dann wird der Winkel zwischen dem Bordstein und der Fahrtrajektorie bestimmt, mit dem vorbestimmten Grenzwert verglichen und überprüft, ob der Winkel zwischen der bestimmten Fahrtrajektorie und dem Bordstein den vorbestimmten Grenzwert überschreitet. Nur falls der Winkel den vorbestimmten Grenzwert überschreitet, wird davon ausgegangen, dass die Räder des Kraftfahrzeugs beim Einparkvorgang nicht beschädigt werden, und die Parklücke als für den Einparkvorgang geeignet klassifiziert. Dies bedeutet, dass die Parklücke nur dann für den Einparkvorgang geeignet ist, wenn das Kraftfahrzeug unter einem bestimmten Winkel, welcher größer als der vorbestimmte Grenzwert ist, in die Parklücke einparken kann. Erst dann wird die Parklücke dem Fahrer des Kraftfahrzeugs für den zumindest semi-autonomen Einparkvorgang angeboten beziehungsweise der Einparkvorgang freigegeben. Anders ausgedrückt wird dem Fahrer signalisiert, dass die Parklücke für den Einparkvorgang geeignet ist. Falls aber der Winkel den vorbestimmten Grenzwert unterschreitet, so wird die Parklücke als ungeeignet für den zumindest semi-autonomen Einparkvorgang klassifiziert. Diese ungeeignete Parklücke wird dem Fahrer des Kraftfahrzeugs insbesondere nicht angeboten.

Vorzugsweise wird als der Grenzwert ein Winkel zwischen 29°und 32° insbesondere 30°, vorgegeben. Wenn also der Winkel zwischen der Fahrtrajektorie und dem Bordstein insbesondere größer als 30°ist, so wird die Parklü cke als für den zumindest semi-autonomen Einparkvorgang geeignet klassifiziert. Somit kann besonders zuverlässig eine Beschädigung der Räder und insbesondere der Felgen der Räder beim Rollen des Kraftfahrzeugs über den Bordstein verhindert werden.

Besonders bevorzugt wird das Kraftfahrzeug zumindest semi-autonom zu der Startposition manövriert und/oder der Einparkvorgang entlang der über den Bordstein führenden Fahrtrajektorie zumindest semi-autonom durchgeführt, falls die den Bordstein aufweisende Parklücke als geeignet klassifiziert wurde. Anders ausgedrückt bedeutet dies, dass der zumindest semi-autonome Einparkvorgang nur dann gestartet wird, falls die Parklücke zuvor als für den Einparkvorgang geeignet klassifiziert wurde. Wenn das Kraftfahrzeug während der Klassifizierung bewegt wird und dabei die Startposition passiert, so wird das Kraftfahrzeug nur dann an der Startposition angehalten beziehungsweise gestoppt, wenn die Parklücke als für den Einparkvorgang geeignet klassifiziert wurde. Ausgehend von dieser Startposition wird das Kraftfahrzeug nur dann entlang der bereits bestimmten Fahrtrajektorie zumindest semi-autonom in die Parklücke bewegt, falls der Winkel, unter welchem das Kraftfahrzeug über den Bordstein fährt, den Grenzwert überschreitet und daher eine Beschädigung des Kraftfahrzeugs beim Einparken ausgeschlossen werden kann. Der Erfindung liegt hierbei die Erkenntnis zugrunde, dass das zumindest semi-autonome Manövrieren beziehungsweise Bewegen des Kraftfahrzeugs zu der Startposition für den Fahrer des Kraftfahrzeugs ein Zeichen ist, dass der Einparkvorgang in die Parklücke gestartet wird. Durch das zumindest semi-autonome Bewegen des Kraftfahrzeugs zu der Startposition wird dem Fahrer des Kraftfahrzeugs die Parklücke also angeboten. Würde die Parklücke erst an der Startposition als geeignet klassifiziert werden, also erst nach dem Starten des zumindest semi-autonomen Einparkvorgangs, so könnte das für den Fahrer verwirrend erscheinen.

Die Erfindung weist also den Vorteil auf, dass das Klassifizieren der Parklücke nicht erst nach dem Starten des Einparkvorgangs von der Startposition aus durchgeführt wird, sondern bereits vor dem Starten des Einparkvorgangs. Durch das ausschließliche Anbieten der Parklücke unter der Voraussetzung, dass die Parklücke als für den Einparkvorgang geeignet klassifiziert wurde, wird somit ein besonders hoher Komfort beim Einparken bereitgestellt, ohne dass der Fahrer durch unnötiges Starten des Einparkvorgang einen Zeitverlust erleidet und/oder verwirrt wird.

Es erweist sich als vorteilhaft, wenn einem Fahrer des Kraftfahrzeugs auf einer fahrzeugseitigen Anzeigeeinrichtung eine Information darüber angezeigt wird, ob die den Bordstein aufweisende Parklücke für den Einparkvorgang geeignet ist. Die Anzeigeeinrichtung kann beispielsweise als ein Head-Up-Display und/oder ein Bildschirm in einer Mittelkonsole und/oder einem Armaturenbrett des Kraftfahrzeugs ausgebildet sein. Dazu kann auf der Anzeigeeinrichtung beispielsweise ein von einer fahrzeugseitigen Kamera aufgenommenes Bild des Umgebungsbereiches angezeigt werden, welches die Parklücke umfasst. Diese Parklücke kann dann in Abhängigkeit von einem Ergebnis der Klassifizierung der Parklücke als geeignet oder ungeeignet markiert werden, beispielsweise indem die Parklücke in einer spezifischen Farbe und/oder mit einem spezifischen Symbol markiert wird. Damit kann verhindert werden, dass der Fahrer selbst, also ohne, dass das Kraftfahrzeug semi-autonom manövriert wird, versucht, in eine ungeeignete Parklücke einzuparken und dabei Räder des Kraftfahrzeugs beschädigt werden.

Gemäß einer Weiterbildung der Erfindung wird zum Abschätzen der Startposition ein Abstand bezogen auf das Kraftfahrzeug vorgegeben und die Startposition in Abhängigkeit von dem Abstand zu dem Kraftfahrzeug bestimmt. Anders ausgedrückt wird ein Wert für den Abstand der Startposition relativ zum Kraftfahrzeug vorgegeben. Der Abstand kann beispielsweise ein vorbestimmter Abstand sein, welcher in einer fahrzeugseitigen Speichereinrichtung hinterlegt ist. Die Startposition wird in dem vorbestimmten Abstand zu dem Kraftfahrzeug liegend bestimmt. Anders ausgedrückt wird die Startposition, insbesondere sobald die Parklücke von der fahrzeugseitigen Sensoreinrichtung erfasst wurde, in dem Umgebungsbereich des Kraftfahrzeugs derart definiert, dass die Startposition den vorgegebenen Abstand zu dem Kraftfahrzeug aufweist. Die Startposition wird dabei als ein Punkt in dem Umgebungsbereich in diesem vorgegebenen Abstand bezogen auf das Kraftfahrzeug vorgegeben. Insbesondere wird die in dem Umgebungsbereich definierte Startposition nicht verändert, falls das Kraftfahrzeug während der Klassifizierung weiter bewegt wird. Als der Abstand wird insbesondere ein Wert zwischen mindestens 3 Metern und höchstens 4 Metern bezogen auf das Kraftfahrzeug vorgegeben. Durch das Vorgeben des Abstandes kann die Startposition besonders einfach und aufwandsarm angeschätzt werden und die Klassifizierung der Parklücke damit besonders schnell durchgeführt werden. Alternativ zum Vorgegeben des Abstandes relativ zum Kraftfahrzeug kann auch ein Abstand beziehungsweise eine Position relativ zur der Parklücke vorgegeben werden und die Startposition an der Position relativ zur Parklücke liegend bestimmt werden. Dazu kann beispielsweise bei einer Längsparklücke die Position bezogen auf diejenige Seite der Parklücke vorgegeben werden, über welche das Kraftfahrzeug in die Parklücke, insbesondere rückwärts, einparkt.

Vorzugsweise wird die Startposition in dem vorgegebenen Abstand auf einer Verlängerung der sich entlang einer Fahrtrichtung des Kraftfahrzeugs erstreckenden Fahrzeuglängsachse in der Fahrtrichtung vor dem Kraftfahrzeug liegend bestimmt. Insbesondere wird die Startposition in einer Vorwärtsfahrtrichtung des Kraftfahrzeugs vor dem Kraftfahrzeug liegend bestimmt. Dazu kann, beispielsweise basierend auf einem aktuellen Lenkwinkel des Kraftfahrzeugs die Fahrtrichtung für das Kraftfahrzeug bestimmt werden und die Startposition auf der sich entlang der Fahrtrichtung erstreckenden Verlängerung der Fahrzeuglängsachse des Kraftfahrzeugs liegend bestimmt werden. Insbesondere wird als die den Bordstein aufweisende Parklücke eine Längsparklücke erkannt und die Startposition in dem vorgegebenen Abstand in einer parallel zu der Parklücke orientierten Fahrtrichtung des Kraftfahrzeugs vor dem Kraftfahrzeug liegend bestimmt. Die Längsparklücke wird insbesondere in einer Vorbeifahrt des Kraftfahrzeugs an der Längsparklücke erkannt und erstreckt sich dabei entlang der Fahrtrichtung des Kraftfahrzeugs parallel zu der Fahrzeuglängsachse des Kraftfahrzeugs. Sobald die Parklücke erkannt wurde, wird in dem vorbestimmten Abstand zu dem Kraftfahrzeug die Startposition in der Fahrtrichtung vor dem Kraftfahrzeug liegend bestimmt und auf der Verlängerung der parallel zu der Fahrtrichtung und damit zur Parklücke orientierten Fahrzeuglängsachse bestimmt. Da das Fahrzeug insbesondere zum Rückwärtseinparken an der Parklücke vorbeifährt und dabei insbesondere parallel zu einer Erstreckungsrichtung der Parklücke positioniert wird, kann durch das Abschätzen der Startposition in Fahrtrichtung vor dem Kraftfahrzeug die Fahrtrajektorie besonders zuverlässig bestimmt werden. Auch bei einer in Abhängigkeit von dem Abstand relativ zur Parklücke abgeschätzten Startposition kann die Startposition in Fahrtrichtung vor dem Kraftfahrzeug liegend und auf der Verlängerung der Fahrzeuglängsachse liegend bestimmt werden.

Vorzugsweise wird der Abstand dabei in Abhängigkeit von einer Länge des Kraftfahrzeugs vorgegeben. Dabei wird der Abstand insbesondere umso größer gewählt, je länger das Kraftfahrzeug ist. Somit kann für jede Art von Kraftfahrzeug besonders zuverlässig ausgehend von der Startposition eine realistische Fahrtrajektorie geplant werden und damit der Winkel zwischen der Fahrtrajektorie und dem Bordstein besonders zuverlässig bestimmt werden. Der für das Kraftfahrzeug in Abhängigkeit von dessen Länge bestimmte Abstand kann dabei im Kraftfahrzeug, beispielsweise in einer fahrzeugseitigen Speichereinrichtung, hinterlegt sein, sodass die Steuereinrichtung nach Erkennung der Parklücke durch die fahrzeugseitige Sensoreinrichtung die Startposition besonders schnell und einfach abschätzen kann.

Alternativ oder zusätzlich kann von der fahrzeugseitigen Sensoreinrichtung zumindest eine geometrische Abmessung der Parklücke erfasst werden und der Abstand in Abhängigkeit von der zumindest einen geometrischen Abmessung der Parklücke vorgegeben werden. Insbesondere wird dabei eine Länge der Parklücke als die zumindest eine geometrische Abmessung erfasst. Die Länge der Parklücke kann von der fahrzeugseitigen Sensoreinrichtung beispielsweise anhand von Positionen der die Parklücke begrenzenden Objekte bestimmt werden. Der Abstand wird dabei in Abhängigkeit von der Länge der Parklücke vorgegeben. Dabei kann beispielsweise der in Abhängigkeit von einer Länge des Kraftfahrzeugs vorgegebene und hinterlegte Wert für den Abstand in Abhängigkeit von der erfassten geometrischen Abmessung der Parklücke verändert beziehungsweise skaliert werden. Somit kann die Startposition besonders zuverlässig bestimmt werden und ausgehend von dieser Startposition eine für den Einparkvorgang des Kraftfahrzeugs realistische Fahrtrajektorie geplant werden.

Die Erfindung betrifft außerdem ein Fahrerassistenzsystem zum zumindest semi-autonomen Manövrieren eines Kraftfahrzeugs, welches zum Durchführen eines erfindungsgemäßen Verfahrens ausgelegt ist. Das Fahrerassistenzsystem weist dazu die zumindest eine fahrzeugseitige Sensoreinrichtung sowie eine Steuereinrichtung auf. Das Fahrerassistenzsystem ist dabei als ein Einparkassistenzsystem ausgebildet, welches das Kraftfahrzeug zumindest semi-autonom manövrieren kann.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "vor", "hinter", "neben", "rückwärts", "Vorwärtsrichtung", "Fahrzeuglängsrichtung" (L), "Fahrzeugquerrichtung" (Q), "seitlich" etc. sind bei einem in eine Fahrzeuglängsrichtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs; und
- Fig. 2: das Kraftfahrzeug gemäß Fig. 1 beim Klassifizieren einer Parklücke.

In den Figuren sind gleiche sowie funktionsgleiche Elemente mit den gleichen Bezugszeichen versehen.

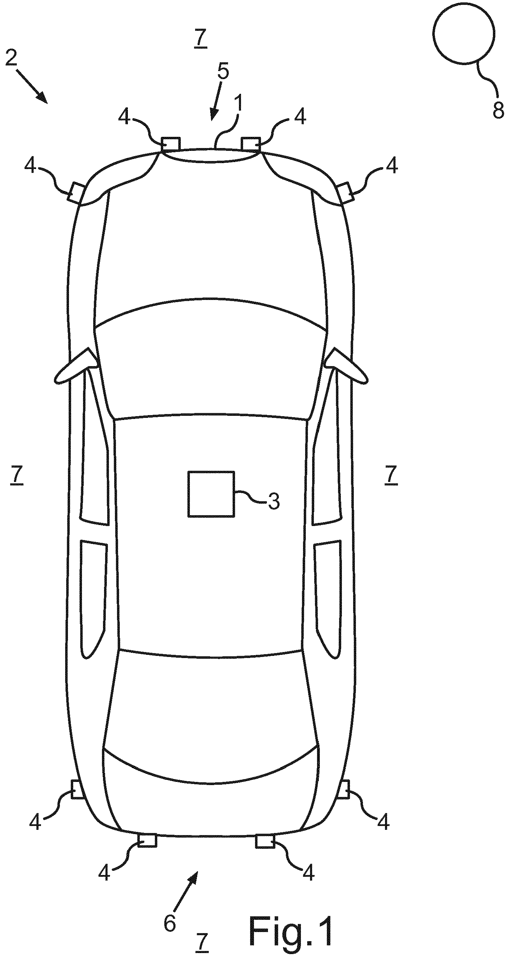

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches einen Fahrer des Kraftfahrzeugs 1 beim Führen des Kraftfahrzeugs 1 unterstützt und welches insbesondere als ein Parkassistenzsystem ausgebildet ist. Das Fahrerassistenzsystem 2 umfasst wiederum eine Steuereinrichtung 3, welche beispielsweise durch ein fahrzeugseitiges Steuergerät (ECU - Electronic Control Unit) ausgebildet sein kann. Mittels des Fahrerassistenzsystems 2 kann das Kraftfahrzeug 1 zumindest semi-autonom manövriert werden. Dazu kann die Steuereinrichtung 3 beim semi-autonomen Manövrieren in eine Lenkung des Kraftfahrzeugs 1 eingreifen, während der Fahrer das Gaspedal und die Bremse des Kraftfahrzeugs 1 betätigt. Beim autonomen beziehungsweise vollautonomen Manövrieren kann die Steuereinrichtung 3 zusätzlich zu der Lenkung des Kraftfahrzeugs 1 die Bremse sowie das Gaspedal des Kraftfahrzeugs 1 betätigen. Darüber hinaus umfasst das Fahrerassistenzsystem 2 zumindest eine fahrzeugseitige Sensoreinrichtung 4, welche zum Überwachen eines Umgebungsbereiches 7 des Kraftfahrzeugs 1 ausgebildet ist.

Im vorliegenden Fall umfasst das Fahrerassistenzsystem 2 acht Sensoreinrichtungen 4, welche im vorliegenden Fall jeweils als Ultraschallsensoren ausgebildet sind. Es kann aber auch vorgesehen sein, dass die fahrzeugseitigen Sensoreinrichtungen 4 als Kameras und/oder Laserscanner ausgebildet sind. Hier sind vier fahrzeugseitige Sensoreinrichtungen 4 an einem Frontbereich 5 des Kraftfahrzeugs 1 zum Überwachen des Umgebungsbereiches 7 vor und neben dem Kraftfahrzeug 1 angeordnet und vier weitere Sensoreinrichtungen 4 an einem Heckbereich 6 des Kraftfahrzeugs 1 zum Überwachen des Umgebungsbereiches 7 hinter und neben dem Kraftfahrzeug 1 angeordnet. Insbesondere sind die Sensoreinrichtungen 4 dazu ausgelegt, ein Objekt 8 in dem Umgebungsbereich 7 zu erfassen sowie eine relative Lage zwischen dem Objekt 8 und dem Kraftfahrzeug 1 beziehungsweise einen Abstand des Objektes 8 relativ zum Kraftfahrzeug 1 zu bestimmen.

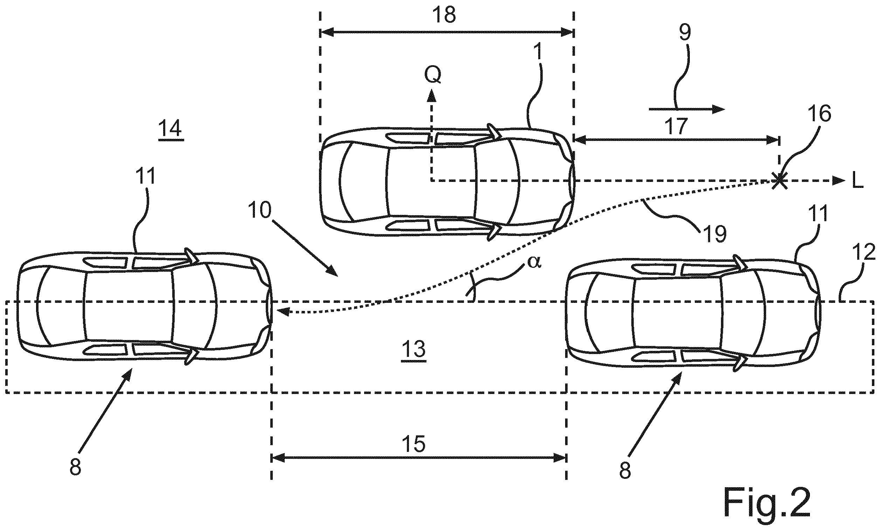

Fig. 2 zeigt das Kraftfahrzeug 1, welches in einer Fahrtrichtung 9, hier in einer entlang einer Fahrzeuglängsachse L des Kraftfahrzeugs 1 orientierten Vorwärtsrichtung, auf einer Fahrbahn 14 fährt. Dabei fährt das Kraftfahrzeug 1 an einer Parklücke 10 vorbei, welche hier in Fahrzeugquerrichtung Q neben dem Kraftfahrzeug 1 liegt und durch zwei andere, geparkte Kraftfahrzeuge 11 begrenzt ist. Die Parklücke 10 ist im vorliegenden Fall eine Längsparklücke, wobei sich eine Länge 15 der Parklücke 10 entlang der Fahrtrichtung 9 und damit parallel zu der Fahrzeuglängsachse L des Kraftfahrzeugs 1 erstreckt. Die Parklücke 10 weist einen Bordstein 12 auf, welcher sich über die Länge 15 der Parklücke 10 erstreckt. Eine Haupterstreckungsrichtung des Bordsteins 12 ist also hier ebenfalls parallel zu der Fahrzeuglängsachse L orientiert. Der Bordstein 12 begrenzt dabei eine Stufe 13, welche gegenüber der Fahrbahn 14, auf welcher sich das Kraftfahrzeug 1 entlang der Fahrtrichtung 9 bewegt, erhaben beziehungsweise erhöht ist. Falls also das Kraftfahrzeug 1 rückwärts in die als Längsparklücke ausgebildete Parklücke 10 eingeparkt wird, so wird zumindest ein Rad des Kraftfahrzeugs 1 über den Randstein 12 bewegt. In einer Parkposition nach Beendigung des Einparkvorgangs ist das Kraftfahrzeug 1 somit bereichsweise auf der Stufe 13 positioniert und bereichsweise auf der Fahrbahn 14 positioniert. Die Parklücke 10 sowie Abmessungen der Parklücke 10, beispielsweise die Länge 15 der Parklücke 10, können von der fahrzeugseitigen Sensoreinrichtung 4 detektiert werden. Zum Vermessen der Parklücke 10 kann die fahrzeugseitige Sensoreinrichtung 4 die anderen Kraftfahrzeuge 11 beispielsweise als Objekte 8 erfassen und eine Position der Objekte 8 relativ zum Kraftfahrzeug 1 bestimmen. Dadurch kann die Sensoreinrichtung 4 einen Abstand zwischen den beiden als Objekte 8 erfassten Kraftfahrzeugen 11 bestimmen und diesen Abstand als die Länge 15 der Parklücke 10 erkennen.

Vor dem Start des Einparkvorgangs, welcher insbesondere zumindest semi-autonom durchgeführt wird, wird die Parklücke 10 von dem Fahrerassistenzsystem 2 klassifiziert. Das Kraftfahrzeug 1 wird durch das Fahrerassistenzsystem 2 nur dann zumindest semi-autonom in die Parklücke 10 eingeparkt, falls die Parklücke 10 als für den Einparkvorgang geeignet klassifiziert wurde, und beispielsweise die Reifen des Kraftfahrzeugs beim Rollen über den Randstein 12 nicht beschädigt werden. Um nun die Parklücke 10 zu klassifizieren, wird von dem Fahrerassistenzsystem 2 eine Startposition 16 für das Kraftfahrzeug 1 in dem Umgebungsbereich 7 bestimmt beziehungsweise abgeschätzt, an welcher der zumindest semi-autonome Einparkvorgang gestartet werden soll. Anders ausgedrückt wird diejenige Position in dem Umgebungsbereich 7 des Kraftfahrzeugs 1 als Startposition 16 bestimmt, ausgehend von welcher das Kraftfahrzeug 1 in die Parklücke 10 bewegt werden soll. Zum Abschätzen der Startposition 16 wird hier ein Abstand 17 relativ zum Kraftfahrzeug 1 vorgegeben, wobei die Startposition 16 in diesem Abstand 17 zum Kraftfahrzeug 1 liegend bestimmt wird. Alternativ dazu kann ein Abstand relativ zu der Parklücke 10 vorgegeben werden und die Startposition 16 in Abhängigkeit von dem Abstand relativ zur Parklücke 10 bestimmt werden. Der Abstand relativ zur Parklücke 10 kann beispielsweise bezogen auf eine Begrenzung der Parklücke 10, hier beispielsweise bezogen auf einen Heckbereich des rechtsseitig dargestellten Kraftfahrzeugs 11, vorgegeben werden.

Die Startposition 16 wird also derart bestimmt, dass sie den vorbestimmten Abstand 17 zum Kraftfahrzeug 1 beziehungsweise den vorbestimmten Abstand zur Parklücke 10 aufweist. In diesem Abstand 17 wird die Startposition 16 insbesondere in der Fahrtrichtung 9 vor dem Kraftfahrzeug 1 und auf einer Verlängerung der Fahrzeuglängsachse L liegend bestimmt. Der Abstand 17 kann dabei in Abhängigkeit von einer Länge 18 des Kraftfahrzeugs 1 vorgegeben sein und in einer fahrzeugseitigen Speichereinrichtung hinterlegt sein. Alternativ oder zusätzlich kann der Abstand 17 in Abhängigkeit von der Länge 15 der Parklücke 10, welche von der fahrzeugseitigen Sensoreinrichtung 4 erfasst wird, bestimmt werden. Der Abstand 17 umfasst insbesondere einen Wert zwischen mindestens 3 Metern und höchstens 4 Metern.

Ausgehend von dieser Startposition 16 wird eine Fahrtrajektorie 19 für den Einparkvorgang in die Parklücke 10 geplant, entlang welcher das Kraftfahrzeug 1 bei dem Einparkvorgang in die Parklücke 10 bewegt werden soll. Die Fahrtrajektorie 19 führt dabei über den Bordstein 12 beziehungsweise kreuzt den Bordstein 12 unter einem Winkel α. Dieser Winkel α kann, beispielsweise von der Steuereinrichtung 3, bestimmt beziehungsweise erfasst werden. Wenn dieser Winkel α einen vorbestimmten Grenzwert, beispielsweise 30°, überschreitet, so wird die Park lücke 10 als geeignet für das zumindest semi-autonome Einparkmanöver des Kraftfahrzeugs 1 klassifiziert. Wenn der Winkel α nämlich größer als der vorbestimmte Grenzwert ist, so kann davon ausgegangen werden, dass das Kraftfahrzeug 1 beim Einparken "steil genug" über den Bordstein 12 bewegt wird, ohne dass dabei beispielsweise die Räder des Kraftfahrzeugs 1 beschädigt werden. Wenn der Winkel α den vorbestimmten Grenzwert unterschreitet, so wird die Parklücke 10 als ungeeignet klassifiziert. Nur wenn die Parklücke 10 als geeignet für den zumindest semi-autonomen Einparkvorgang klassifiziert wurde, wird die Parklücke 10 dem Fahrer des Kraftfahrzeugs 1 angeboten, indem der zumindest semi-autonome Einparkvorgang gestartet wird und das Kraftfahrzeug 1 beispielsweise zu der Startposition 16 bewegt wird. Ausgehend von der Startposition 16 kann dann das Kraftfahrzeug 1 entlang der Fahrtrajektorie 19 zumindest semi-autonom in die geeignete Parklücke 10 eingeparkt werden.

Außerdem kann dem Fahrer des Kraftfahrzeugs 1 auf einer hier nicht gezeigten fahrzeugseitigen Anzeigeeinrichtung das Ergebnis der Klassifizierung der Parklücke 10 angezeigt werden. Beispielsweise kann dem Fahrer ein Signal angezeigt werden, falls die Parklücke 10 ungeeignet für den zumindest semi-autonomen Einparkvorgang ist. Insbesondere wird auf der fahrzeugseitigen Anzeigeeinrichtung ein von einer Kamera des Kraftfahrzeugs 1 erfasstes Bild des Umgebungsbereiches 7 mit der Parklücke 10 angezeigt und entsprechend markiert. Außerdem kann dem Fahrer zusätzlich die Information angezeigt werden, dass die Parklücke 10 aufgrund des Winkels α, in welchem das Kraftfahrzeug 1 beim Einparken über den Bordstein 12 bewegt werden wird, ungeeignet ist. Somit kann verhindert werden, dass der Fahrer selbstständig versucht, in die Parklücke 10 einzuparken und dabei das Kraftfahrzeug 1 beschädigt.

## Patentansprüche

1. Verfahren zum Unterstützen eines Fahrers eines Kraftfahrzeugs (1) bei einem Einparkvorgang in eine einen Bordstein (12) aufweisende Parklücke (10), bei welchem mittels einer fahrzeugseitigen Sensoreinrichtung (4) die den Bordstein (12) aufweisende Parklücke (10) in einem Umgebungsbereich (7) des Kraftfahrzeugs (1) erkannt wird,
wobei
in dem Umgebungsbereich (7) eine Startposition (16) für den Einparkvorgang des Kraftfahrzeugs (1) in die Parklücke (10) abgeschätzt wird, ausgehend von der abgeschätzten Startposition (16) eine über den Bordstein (12) in die Parklücke (10) führende Fahrtrajektorie (19) für das Kraftfahrzeug (1) bestimmt wird, ein Winkel (α) zwischen der Fahrtrajektorie (19) und dem Bordstein (12) bestimmt wird und die Parklücke (10) als für den Einparkvorgang geeignet klassifiziert wird, falls der Winkel (α) einen vorbestimmten Grenzwert überschreitet, **dadurch gekennzeichnet, dass**
einem Fahrer des Kraftfahrzeugs (1) auf einer fahrzeugseitigen Anzeigeeinrichtung eine Information darüber angezeigt wird, ob die den Bordstein (12) aufweisende Parklücke (10) für den Einparkvorgang geeignet ist.

2. Verfahren nach Anspruch 1,
**dadurch gekennzeichnet, dass**
das Kraftfahrzeug (1) zumindest semi-autonom zu der Startposition (16) manövriert wird und/oder der Einparkvorgang entlang der über den Bordstein (12) führenden Fahrtrajektorie (19) zumindest semi-autonom durchgeführt wird, falls die den Bordstein (12) aufweisende Parklücke (10) als geeignet klassifiziert wurde.

3. Verfahren nach einem der vorhergehenden Ansprüche,
**dadurch gekennzeichnet, dass**
als der Grenzwert ein Winkel zwischen 29°und 32°, insbesondere 30°, vorgegeben wird.

4. Verfahren nach einem der vorhergehenden Ansprüche,
**dadurch gekennzeichnet, dass**
zum Abschätzen der Startposition (16) ein Abstand (17) bezogen auf das Kraftfahrzeug (1) vorgegeben wird und die Startposition (16) in Abhängigkeit von dem vorgegebenen Abstand (17) zu dem Kraftfahrzeug (1) bestimmt wird.

5. Verfahren nach Anspruch 4,
**dadurch gekennzeichnet, dass**
die Startposition (16) in dem vorgegebenen Abstand (17) auf einer Verlängerung der sich entlang einer Fahrtrichtung (9) des Kraftfahrzeugs (1) erstreckenden Fahrzeuglängsachse (L) in der Fahrtrichtung (9) vor dem Kraftfahrzeug (1) liegend bestimmt wird.

6. Verfahren nach Anspruch 4 oder 5,
**dadurch gekennzeichnet, dass**
als die den Bordstein (12) aufweisende Parklücke (10) eine Längsparklücke erkannt wird und die Startposition (16) in dem vorgegebenen Abstand (17) in einer parallel zu der Parklücke (10) orientierten Fahrtrichtung (9) des Kraftfahrzeugs (1) vor dem Kraftfahrzeug (1) und auf der Verlängerung der Fahrzeuglängsachse (L) liegend bestimmt wird.

7. Verfahren nach einem der Ansprüche 4 bis 6,
**dadurch gekennzeichnet, dass**
der Abstand (17) in Abhängigkeit von einer Länge (18) des Kraftfahrzeugs (1) vorgegeben wird.

8. Verfahren nach einem der Ansprüche 4 bis 7,
**dadurch gekennzeichnet, dass**
von der fahrzeugseitigen Sensoreinrichtung (4) zumindest eine geometrische Abmessung (15) der Parklücke (10) erfasst wird und der Abstand (17) in Abhängigkeit von der zumindest einen geometrischen Abmessung (15) der Parklücke (10) vorgegeben wird.

9. Verfahren nach einem der Ansprüche 7 bis 8,
**dadurch gekennzeichnet, dass**
für den Abstand (17) ein Wert zwischen mindestens 3 Metern und ein höchstens 4 Metern vorgegeben wird.

10. Verfahren nach einem der vorhergehenden Ansprüche,
**dadurch gekennzeichnet, dass**
die den Bordstein (12) aufweisende Parklücke (10) mittels eines Ultraschallsensors und/oder eines Laserscanners und/oder einer Kamera als die fahrzeugseitige Sensoreinrichtung (4) erkannt wird.

11. Fahrerassistenzsystem (2) für ein Kraftfahrzeug (1) zum Unterstützen eines Fahrers des Kraftfahrzeugs (1) bei einem Einparkvorgang in eine einen Bordstein (12) aufweisende Parklücke (10), wobei das Fahrerassistenzsystem (2) zum Durchführen eines Verfahrens nach einem der vorhergehenden Ansprüche ausgelegt ist.

12. Kraftfahrzeug (1) mit einem Fahrerassistenzsystem (2) nach Anspruch 12.

## Claims

1. Method for assisting a driver of a motor vehicle (1) during a procedure for parking in a parking gap (10) having a kerb (12), in which a vehicle side sensor device (4) is used to identify the parking gap (10) having the kerb (12) in a surrounding area (7) of the motor vehicle (1), wherein
in the surrounding area (7) a start position (16) for the procedure for parking the motor vehicle (1) in the parking gap (10) is estimated, proceeding from the estimated start position (16) a travel trajectory (19) leading into the parking gap (10) via the kerb (12) is determined for the motor vehicle (1), an angle (α) between the travel trajectory (19) and the kerb (12) is determined and the parking gap (10) is classified as suitable for the parking procedure if the angle (α) exceeds a predetermined limit value, **characterized in that** information about whether the parking gap (10) having the kerb (12) is suitable for the parking procedure is displayed to a driver of the motor vehicle (1) on a vehicle-side display device.

2. Method according to Claim 1,
**characterized in that**
the motor vehicle (1) is manoeuvred at least semi-autonomously to the start position (16) and/or the parking procedure is carried out at least semi-autonomously along the travel trajectory (19) leading via the kerb (12) if the parking gap (10) having the kerb (12) was classified as suitable.

3. Method according to either of the preceding claims,
**characterized in that**
an angle of between 29° and 32°, in particular 30°, is predefined as the limit value.

4. Method according to any of the preceding claims,
**characterized in that**
for estimating the start position (16) a distance (17) relative to the motor vehicle (1) is predefined and the start position (16) is determined depending on the predefined distance (17) with respect to the motor vehicle (1).

5. Method according to Claim 4,
**characterized in that**
the start position (16) is determined at the predefined distance (17) in a manner lying on an extension of the vehicle longitudinal axis (L) which extends along a travel direction (9) of the motor vehicle (1), in front of the motor vehicle (1) in the travel direction (9).

6. Method according to Claim 4 or 5,
**characterized in that**
a longitudinal parking gap is identified as the parking gap (10) having the kerb (12), and the start position (16) is determined at the predefined distance (17) in front of the motor vehicle (1) in a travel direction (9) of the motor vehicle (1), said travel direction being oriented parallel to the parking gap (10), and in a manner lying on the extension of the vehicle longitudinal axis (L).

7. Method according to any of Claims 4 to 6,
**characterized in that**
the distance (17) is predefined depending on a length (18) of the motor vehicle (1).

8. Method according to any of Claims 4 to 7,
**characterized in that**
at least one geometric dimension (15) of the parking gap (10) is detected by the vehicle side sensor device (4) and the distance (17) is predefined depending on the at least one geometric dimension (15) of the parking gap (10).

9. Method according to either of Claims 7 and 8,
**characterized in that**
a value of between at least 3 metres and at most 4 metres is predefined for the distance (17).

10. Method according to any of the preceding claims,
**characterized in that**
the parking gap (10) having the kerb (12) is identified by means of an ultrasonic sensor and/or a laser scanner and/or a camera as the vehicle side sensor device (4).

11. Driver assistance system (2) for a motor vehicle (1) for assisting a driver of the motor vehicle (1) during a procedure for parking in a parking gap (10) having a kerb (12), wherein the driver assistance system (2) is designed for carrying out a method according to any of the preceding claims.

12. Motor vehicle (1) comprising a driver assistance system (2) according to Claim 12.

## Revendications

1. Procédé pour assister un conducteur d'un véhicule automobile (1) lors d'une manoeuvre d'entrée en stationnement dans une place de stationnement (10) qui présente une bordure de trottoir (12), selon lequel la place de stationnement (10) qui présente la bordure de trottoir (12) est reconnue dans une zone environnante (7) du véhicule automobile (1) au moyen d'un dispositif détecteur (4) côté véhicule,
une position de départ (16) pour la manoeuvre d'entrée en stationnement du véhicule automobile (1) étant estimée dans la zone environnante (7), une trajectoire de déplacement (19) menant dans la place de stationnement (10) en passant au-dessus de la bordure de trottoir (12) étant déterminée pour le véhicule automobile (1) à partir de la position de départ (16) estimée, un angle (α) entre la trajectoire de déplacement (19) et la bordure de trottoir (12) étant déterminé et la place de stationnement (10) étant classifiée comme adaptée à la manoeuvre d'entrée en stationnement dans le cas où l'angle (α) dépasse une valeur de seuil prédéterminée, **caractérisé en ce que** une information est affichée à un conducteur du véhicule automobile (1) sur un dispositif d'affichage côté véhicule à propos de l'adaptation à la manoeuvre d'entrée en stationnement de la place de stationnement (10) qui présente la bordure de trottoir (12).

2. Procédé selon la revendication 1, **caractérisé en ce que** le véhicule automobile (1) est manoeuvré au moins en semi-autonomie jusqu'à la position de départ (16) et/ou la manoeuvre d'entrée en stationnement le long de la trajectoire de déplacement (19) passant au-dessus de la bordure de trottoir (12) est effectuée au moins en semi-autonomie dans le cas où la place de stationnement (10) qui présente la bordure de trottoir (12) a été classée adaptée.

3. Procédé selon l'une des revendications précédentes, **caractérisé en ce que** la valeur limite prédéfinie est un angle entre 29° et 32°, notamment égal à 30°.

4. Procédé selon l'une des revendications précédentes, **caractérisé en ce qu'**un écart (17) par rapport au véhicule automobile (1) est prédéfini pour estimer la position de départ (16) et la position de départ (16) est déterminée en fonction de l'écart (17) prédéfini par rapport au véhicule automobile (1).

5. Procédé selon la revendication 4, **caractérisé en ce que** la position de départ (16) à l'écart (17) prédéfini est déterminée se trouver devant le véhicule automobile (1) dans un sens de déplacement (9) sur une prolongation de l'axe longitudinal de véhicule (L) qui s'étend le long du sens de déplacement (9) du véhicule automobile (1).

6. Procédé selon la revendication 4 ou 5, **caractérisé en ce que** la place de stationnement (10) qui présente la bordure de trottoir (12) reconnue est une place de stationnement longitudinale et la position de départ (16) à l'écart (17) prédéfini est déterminée se trouver devant le véhicule automobile (1) dans un sens de déplacement (9) du véhicule automobile (1) orienté parallèlement à la place de stationnement (10) et sur la prolongation de l'axe longitudinal de véhicule (L).

7. Procédé selon l'une des revendications 4 à 6, **caractérisé en ce que** l'écart (17) est prédéfini en fonction d'une longueur (18) du véhicule automobile (1) .

8. Procédé selon l'une des revendications 4 à 7, **caractérisé en ce qu'**au moins une dimension géométrique (15) de la place de stationnement (10) est détectée devant le dispositif détecteur (4) côté véhicule et l'écart (17) est prédéfini en fonction de l'au moins une dimension géométrique (15) de la place de stationnement (10).

9. Procédé selon l'une des revendications 7 à 8, **caractérisé en ce qu'**une valeur entre au minimum 3 mètres et au maximum 4 mètres est prédéfinie pour l'écart (17).

10. Procédé selon l'une des revendications précédentes, **caractérisé en ce que** la place de stationnement (10) qui présente la bordure de trottoir (12) est reconnue au moyen d'un capteur à ultrasons et/ou d'un système de balayage à laser et/ou d'une caméra en tant que dispositif détecteur (4) côté véhicule.

11. Système d'assistance au conducteur (2) pour un véhicule automobile (1) destinée à assister un conducteur du véhicule automobile (1) lors d'une manoeuvre d'entrée en stationnement dans une place de stationnement (10) qui présente une bordure de trottoir (12), le système d'assistance au conducteur (2) étant conçu pour mettre en oeuvre un procédé selon l'une des revendications précédentes.

12. Véhicule automobile (1) équipé d'un système d'assistance au conducteur (2) selon la revendication 12.
